# EUROPEAN PATENT APPLICATION

(11) **EP 4 360 747 A1**
(43) Date of publication of application: **01.05.2024**
(21) Application number: 23790217.6
(22) Date of filing: 18.02.2023
(51) Int. Cl.: B01F 33/82, B01F 35/71, B01F 23/50, B01F 23/53, B01F 33/80, B01F 27/80, H01M 4/04, B29C 48/67

(54) **MULTIFUNCTIONAL KNEADING TYPE SLURRYING MACHINE**

(30) Priority: 05.09.2022 CN 202222362175 U
(71) Applicant: Ongoal Technology Co., Ltd., Dongguan, Guangdong 523000 (CN)
(72) Inventor: WANG, Xie, Guangdong 52300 (CN); YANG, Hailun, Guangdong 52300 (CN); YUAN, Chao, Guangdong 52300 (CN); DAI, Xiaobing, Guangdong 52300 (CN); HE, Jie, Guangdong 52300 (CN)
(74) Representative: Ostertag & Partner Patentanwälte mbB
(86) International application number: PCT/CN2023/077008
(87) International publication number: WO 2024/051094

(57) **Abstract**

Disclosed is a multifunctional kneading-type slurry producing machine, which includes a base frame and a screw. The base frame is provided with a kneading tube and a dispersing cavity. The kneading tube is provided with a kneading cavity, the kneading tube is further provided with a powder inlet, a slurry inlet, and a slurry outlet which are all communicated with the kneading cavity. The screw is threaded through the kneading cavity and pivotally connected to the base frame. The dispersing cavity is provided with a dispersing zone inlet and a dispersing zone outlet, and is configured to accommodate a dispersing stator and a dispersing rotor interacting with the dispersing stator. A shank portion of the screw is threaded through and drivingly connected to the dispersing rotor. The slurry producing machine can not only realize the kneading but also the dispersing for the slurry, thereby increasing the solid content of slurry.

## Description

### TECHNICAL FIELD

The present application relates to the technical field of slurry producing machine, in particular to a multifunctional kneading-type slurry producing machine.

### BACKGROUND

The material of lithium-ion battery is typically made by a slurry producing machine. When making the slurry, the screw drives the slurry to be transported and kneaded, so as to make the powder and the liquid solvent to be mixed and dispersed sufficiently to produce high performance slurry. However, the conventional slurry producing machine has single function as they can only knead the slurry with the screw, and since both the single screw slurry producing machine and the double screw slurry producing machine can produce high solid content slurry, so there is a need to configure additional dispersing equipment to disperse the high solid content slurry, which will increase the cost.

### SUMMARY

In order to overcome the shortcomings of the related technique, the present application aims to provide a multifunctional kneading-type slurry producing machine, which can not only knead the slurry, but also disperse the slurry, that is, integrating the kneading function and the dispersing function for the slurry into the multifunctional kneading-type slurry producing machine, which reduces the equipment cost.

The purpose of the present application can be achieved by the following technical solutions:

A multifunctional kneading-type slurry producing machine, including a base frame and a screw. The base frame is provided with a kneading tube and a dispersing cavity. The kneading tube is provided with a kneading cavity, a powder inlet, a slurry inlet, and a slurry outlet, and the powder inlet, the slurry inlet and the slurry outlet are all communicated with the kneading cavity. The screw is threaded through the kneading cavity and pivotally connected to the base frame. The dispersing cavity is provided with a dispersing zone inlet and a dispersing zone outlet, and is configured to accommodate a dispersing stator and a dispersing rotor interacting with the dispersing stator. A shank portion of the screw is threaded through and drivingly connected to the dispersing rotor.

Further, an inner wall of the kneading tube is provided with a plurality of turbulence projections which are arranged at intervals and surrounded around a periphery of the screw.

Further, a blade of the screw located in a portion surrounded by the turbulence projections is provided with gaps for avoiding the turbulence projections.

Further, a section of the screw located in the kneading cavity is formed by a plurality of unit tubes jointing together, and an outer wall of each unit tube is provided with the blade.

Further, an inner wall of each unit tube is provided with an axial positioning groove, and the screw is connected to a connecting rod which is threaded through a plurality of the axial positioning grooves.

Further, the turbulence projections are pins, and the pins are threaded from an outer wall of the kneading tube into the kneading cavity.

Further, the base frame is provided with a cooling tank which is wrapped around the kneading tube and provided with a cooling fluid inlet and a cooling fluid outlet.

Further, the screw is extended along a gravity direction, and a top of the kneading tube is hollowed out to form the powder inlet.

Compared to the related technique, at least part of the benefits of the present application are:

A part of the screw is accommodated in the kneading cavity, while another part of the other end of the screw is accommodated in the dispersing cavity, which enables the screw to be used not only to drive the blade to knead the slurry, but also to drive the dispersing rotor, then the dispersing stator and the dispersing rotor can shear and grind the slurry to improve the performance of the slurry. By doing so, the kneading function and dispersing function for the slurry are both integrated into the multifunctional kneading-type slurry producing machine, and thereby reducing the cost. In addition, since one end of the screw is provided with the blade, it will cause the screw to be unbalanced and bearing sets to be easily worn out. But in the present application, the other end of the screw is provided with the dispersing rotor, which makes the two ends of the screw more balanced in weight, and thereby prolonging the service life of the slurry producing machine.

### BRIEF DESCRIPTION OF THE DRAWINGS

FIG. 1 is a schematic structural view of a multifunctional kneading-type slurry producing machine according to a first embodiment of the present application.
FIG. 2 is a schematic structural view of a unit tube in FIG. 1.
FIG. 3 is a schematic view showing a connection relationship between the multifunctional kneading-type slurry producing machine of FIG. 1 and other equipment.

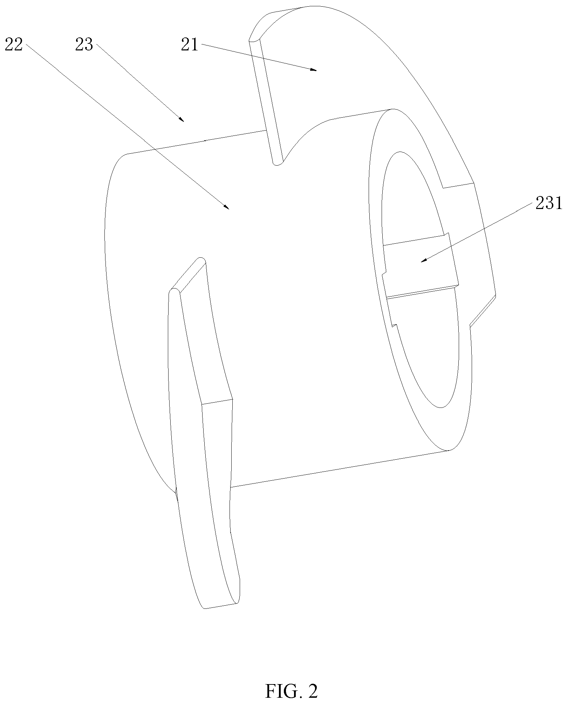

FIG. 2 is a schematic structural view of a multifunctional kneading-type slurry producing machine according to a second embodiment of the present application.

Description of reference numbers in drawings: 1-base frame, 11-kneading tube, 111-kneading cavity, 112-powder inlet, 113-slurry inlet, 114-slurry outlet, 12-dispersing cavity, 121-dispersing zone inlet, 122-dispersing zone outlet, 13-dispersing stator, 14-dispersing rotor, 15-turbulence projection, 2-screw, 21-blade, 22-gap, 23-unit tube, 231-axial positioning groove, 3-cooling tank, 31-cooling fluid inlet, 32-cooling fluid outlet, 4-kneading can, 5-dispersing can, 6-first tube, 7-second tube, 8-third tube, 9-fourth tube.

### DETAILED DESCRIPTION OF THE EMBODIMENTS

The present application will be further described below combining with the drawings and embodiments. It should be noted that, the embodiments and technical features described below, which otherwise conflict with each other, may be combined in any form to form new embodiments.

It should be noted that, when an element is defined to be "fixed" to another element, it may be located on the other element, or there may exist an intermediate element. When an element is defined to be "connected" to another element, it may be directly connected to another element or there may exist an intermediate element. The terms such as "vertical", "horizontal", "left", "right", and similar expressions appearing in the present application are only for descriptive purposes, and are not represented as the only embodiment.

Unless otherwise defined, the technical terms and scientific terms appearing in the present application have the meaning as understood by those skilled in the art of the present application. The terms appearing in the present application are only for the purpose of describing the specific embodiments, and are not intended to limit the present application. The term "and/or" appearing in the present application includes any combination consisting of one or more related listed subject matters.

### The first embodiment:

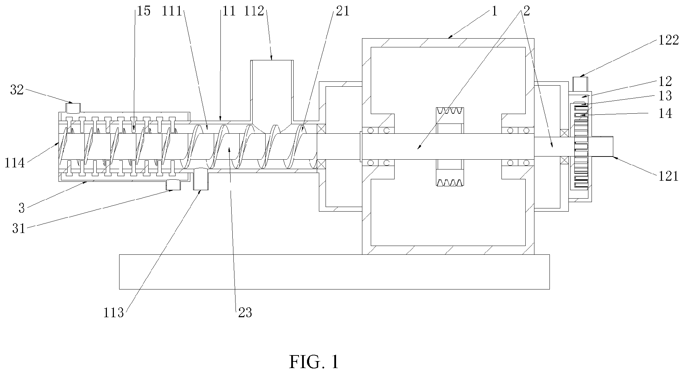

FIGS. 1 to 3 show the first embodiment of the present application, and the multifunctional kneading-type slurry producing machine according to this embodiment includes a base frame 1 and a screw 2. The base frame 1 is provided with a kneading tube 11 having a kneading cavity 111, and the kneading tube 11 is also provided with a powder inlet 112, a slurry inlet 113, and a slurry outlet 114 which all communicating with the kneading cavity 111. The screw 2 is threaded through the kneading cavity 111 and pivotally connected to the base frame 1. The base frame 1 is further provided with a dispersing cavity 12, the dispersing cavity 12 is provided with a dispersing zone inlet 121 and a dispersing zone outlet 122, and a dispersing stator 13 and a dispersing rotor 14 which interact with each other are accommodated in the dispersing cavity 12. The shank portion of the screw 2 is threaded through and drivingly connected to the dispersing rotor 14.

When producing the slurry, the powder and the liquid solvent will be firstly kneaded to be transformed into the slurry, and then slurry will be dispersed. That is, the screw 2 of the multifunctional kneading-type slurry producing machine according to this embodiment is used to knead the slurry in the kneading process and to disperse the slurry in the dispersing process, which makes this slurry producing machine have multiple functions and enables that only one power source to be required for kneading and dispersing the slurry.

What can be understood is that, a part of the screw 2 is accommodated in the kneading cavity 111, while another part of the other end of the screw 2 is accommodated in the dispersing cavity 12, which enables the screw 2 to be used not only to drive the blade 21 to knead the slurry, but also to drive the dispersing rotor 14, then the dispersing stator 13 and the dispersing rotor 14 can shear and grind the slurry to improve the performance of the slurry. In this embodiment, the kneading function and dispersing function for the slurry are both integrated into the multifunctional kneading-type slurry producing machine, and thereby reducing the cost. In addition, since one end of the screw 2 is provided with the blade 21, it will cause the screw 2 to be unbalanced and bearing sets to be easily worn out. But in this embodiment, the other end of the screw 2 is provided with the dispersing rotor 14, which makes the two ends of the screw 2 more balanced in weight, and thereby prolonging the service life of the slurry producing machine.

It should be noted that, the combination of the dispersing stator 13 and dispersing rotor 14 belongs to the conventional technical solutions, and a conventional dispersing mechanism could be adopted in the above embodiment.

Preferably, the inner wall of the kneading tube 11 could be provided with a plurality of turbulence projections 15 which are arranged at intervals and surrounded around the periphery of the screw 2. The turbulence projections 15 can make the slurry more turbulent and work with the blade 21 to shear the slurry, which improves the kneading effect of the slurry.

Preferably, the blade 21 of the screw 2 surrounded by the turbulence projections 15 could be provided with gaps 22 for avoiding the turbulence projections 15. By doing so, the turbulence projections 15 could reach into the gaps 22, and the area for shearing between the turbulence projections 15 and the blade 21 is increased, which facilitates the kneading for the slurry. It should also be mentioned that, the blade 21 without the gaps 22 could effectively push the slurry forward. As an exemplary implementation, the distance between the turbulence projections 15 and the blade 21 ranges from 2mm to 3mm would be better. Especially, compared with the conventional double screw 2 slurry producing machine, the screw 2 adopted in the single screw slurry producing machine of this embodiment could be designed into a stiff shaft structure, which will reduce the abrasion between the screw 2 and the kneading tube 11.

In order to facilitate the processing of the gaps 22, preferably, the section of the screw 2 located in the kneading cavity 111 is formed by a plurality of unit tubes 23 jointing together, and the outer wall of each unit tube 23 is provided with the blade 21.

In order to smooth the transition between two neighboring blades 21, preferably, the inner wall of each unit tube 23 is provided with an axial positioning groove 231, and the screw 2 is connected to a connecting rod which is threaded through the axial positioning grooves 231.

In order to facilitate forming the turbulence projections 15, preferably, the turbulence projections 15 are pins, and the pins are threaded from an outer wall of the kneading tube 11 into the kneading cavity 111. That is, the turbulence projections 15 could also be formed together with the kneading tube 11 as one part as a substitute implementation.

Preferably, in order to prevent the slurry from being overheated, the base frame 1 is provided with a cooling tank 3 which is wrapped around the kneading tube 11 and provided with a cooling fluid inlet 31 and a cooling fluid outlet 32.

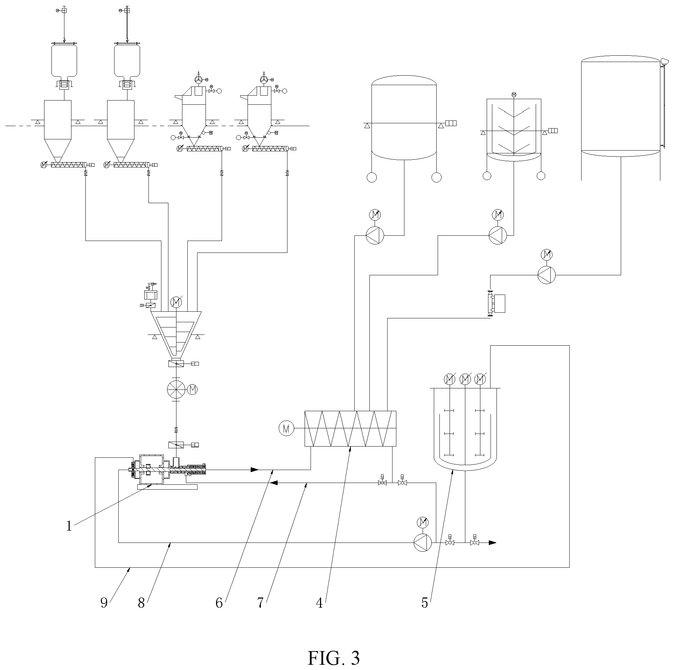

Referring to FIG. 3, when the multifunctional kneading-type slurry producing machine is in a slurry kneading process, the circulation loop of the slurry is: kneading can 4 (where the powder and the liquid solvent are mixed and kneaded) → second tube 7 → slurry inlet 113 of the kneading tube 11 → first tube 6 → kneading can 4 →second tube 7. The high solid content slurry will be formed after the slurry is sufficiently kneaded, and then comes the dispersing process in which the circulation loop is: third tube 8 → dispersing zone inlet 121 of the dispersing cavity 12 → dispersing cavity 12 → dispersing zone outlet 122 of the dispersing cavity 12 → fourth tube 9 → dispersing can 5 → third tube 8. In this circulation loop, the slurry will be dispersed circularly in many times, and the slurry will be dispersed more sufficiently. In the above implementation, the circulation power of the slurry comes from the movement of the screw 2 in the kneading process, and the circulation power of the slurry comes from the circulation pump of the third tube 8 in the dispersing process. Each tube in the above implementation could be provided with valves as needed.

### The second embodiment:

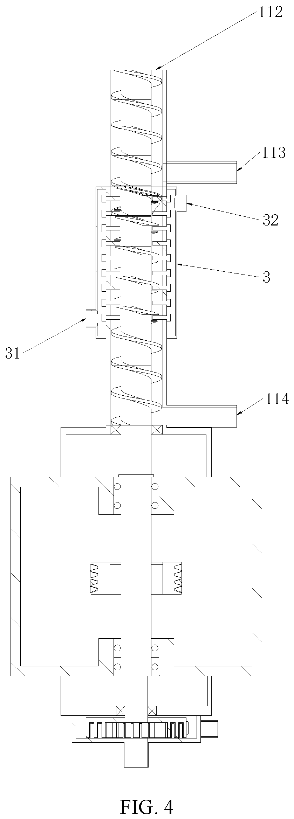

Referring to FIG. 4, the second embodiment of the present application provides a multifunctional kneading-type slurry producing machine according to the first embodiment, but with some differences. The differences are that: the screw 2 is extended along a gravity direction, and a top of the kneading tube 11 is hollowed out to form the powder inlet 112. By doing so, since the powder inlet 112 faces upwards, when the powder is transported into the powder inlet 112 with a funnel, the power will drop on the bottom of the kneading cavity 111 continuously due to its gravity and inertia, and thereby improving the supply efficiency of the power.

The above embodiments are only some preferred embodiments of the present application, and cannot be used to limit the scope of the present application, any unsubstantive variations and substitutions made by those skilled in the art based on the present application shall all fall within the scope of the present application.

## Claims

1. A multifunctional kneading-type slurry producing machine, **characterized by** comprising:
a base frame (1) provided with a kneading tube (11) and a dispersing cavity (12); wherein, the kneading tube (11) is provided with a kneading cavity (111), a powder inlet (112), a slurry inlet (113), and a slurry outlet (114), and the powder inlet (112), the slurry inlet (113) and the slurry outlet (114) are all communicated with the kneading cavity (111); the dispersing cavity (12) is provided with a dispersing zone inlet (121) and a dispersing zone outlet (122), and is configured to accommodate a dispersing stator (13) and a dispersing rotor (14) interacting with the dispersing stator (13);
a screw (2) threaded through the kneading cavity (111) and pivotally connected to the base frame (1);
wherein, a shank portion of the screw (2) is threaded through and drivingly connected to the dispersing rotor (14).

2. The multifunctional kneading-type slurry producing machine according to claim 1, wherein an inner wall of the kneading tube (11) is provided with a plurality of turbulence projections (15) which are arranged at intervals and surrounded around a periphery of the screw (2).

3. The multifunctional kneading-type slurry producing machine according to claim 2, wherein a blade (21) of the screw (2) located in a portion surrounded by the turbulence projections (15) is provided with gaps (22) for avoiding the turbulence projections (15).

4. The multifunctional kneading-type slurry producing machine according to claim 3, wherein a section of the screw (2) located in the kneading cavity (111) is formed by a plurality of unit tubes (23) jointing together, and an outer wall of each unit tube (23) is provided with the blade (21).

5. The multifunctional kneading-type slurry producing machine according to claim 4, wherein an inner wall of each unit tube (23) is provided with an axial positioning groove (231), and the screw (2) is connected to a connecting rod which is threaded through a plurality of the axial positioning grooves (231).

6. The multifunctional kneading-type slurry producing machine according to claim 2, wherein the turbulence projections (15) are pins, and the pins are threaded from an outer wall of the kneading tube (11) into the kneading cavity (111).

7. The multifunctional kneading-type slurry producing machine according to claim 1, wherein the base frame (1) is provided with a cooling tank (3) which is wrapped around the kneading tube (11) and provided with a cooling fluid inlet (31) and a cooling fluid outlet (32).

8. The multifunctional kneading-type slurry producing machine according to claim 1, wherein the screw (2) is extended along a gravity direction, and a top of the kneading tube (11) is hollowed out to form the powder inlet (112).
